(19) **Europäisches Patentamt**
**European Patent Office**
**Office européen des brevets**

(11) **EP 3 117 585 B1**

(12) **EUROPEAN PATENT SPECIFICATION**

(45) Date of publication and mention of the grant of the patent:
**20.10.2021 Bulletin 2021/42**

(21) Application number: **14709614.3**

(22) Date of filing: **10.03.2014**

(51) Int Cl.:
***H04L 29/08*** *(2006.01)*

(86) International application number:
**PCT/EP2014/054538**

(87) International publication number:
**WO 2015/135561 (17.09.2015 Gazette 2015/37)**

(54) **DISTRIBUTION OF POPULAR CONTENT BETWEEN USER NODES OF A SOCIAL NETWORK COMMUNITY VIA DIRECT PROXIMITY-BASED COMMUNICATION**

VERTEILUNG VON BELIEBTEN INHALTEN ZWISCHEN BENUTZERKNOTEN EINER SOZIALEN NETZWERKGEMEINSCHAFT ÜBER DIREKTE PROXIMITÄTSBASIERTE KOMMUNIKATION

DISTRIBUTION D'UN CONTENU POPULAIRE ENTRE DES NOEUDS D'UTILISATEUR D'UNE COMMUNAUTÉ DE RÉSEAU SOCIAL PAR L'INTERMÉDIAIRE D'UNE COMMUNICATION DIRECTE EN FONCTION DE LA PROXIMITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.01.2017 Bulletin 2017/03**

(73) Proprietor: **Nokia Solutions and Networks Oy 02610 Espoo (FI)**

(72) Inventors:
• **BENNIS, Mehdi FI-90540 Oulu (FI)**
• **HORNEMAN, Kari Veikko FI-90800 Oulu (FI)**

(74) Representative: **Nokia EPO representatives Nokia Technologies Oy Karakaari 7 02610 Espoo (FI)**

(56) References cited:
• **NEGIN GOLREZAEI ET AL: "Wireless video content delivery through distributed caching and peer-to-peer gossiping", SIGNALS, SYSTEMS AND COMPUTERS (ASILOMAR), 2011 CONFERENCE RECORD OF THE FORTY FIFTH ASILOMAR CONFERENCE ON, IEEE, 6 November 2011 (2011-11-06), pages 1177-1180, XP032172279, DOI: 10.1109/ACSSC.2011.6190200 ISBN: 978-1-4673-0321-7**
• **CHAI WEI KOONG ET AL: "Cache less for more in information-centric networks (extended version)", COMPUTER COMMUNICATIONS, ELSEVIER SCIENCE PUBLISHERS BV, AMSTERDAM, NL, vol. 36, no. 7, 29 January 2013 (2013-01-29), pages 758-770, XP028526440, ISSN: 0140-3664, DOI: 10.1016/J.COMCOM.2013.01.007**

## Description

FIELD OF THE INVENTION

The invention relates generally to mobile networks.

BACKGROUND

Over the recent years, mobile communications devices have developed and new type of devices, such as smart phones, have become widely available and have substantially enriched the mobile user experience by offering new services and applications to a user. The vast array of new wireless services may include multimedia streaming, web-browsing applications and socially-interconnected networks. However, simultaneously, the amount data being transferred in the network has increased. For example, mobile video streaming already accounts for almost half of mobile data traffic, with a projection of significant increase over the next 10 years. Therefore, for the sake of user experience, solutions for making data transfer more flexible and efficient have raised increased interest.

NEGIN GOLREZAEI ET AL: "Wireless video content delivery through distributed caching and peer-to-peer gossiping", SIGNALS, SYSTEMS AND COMPUTERS (ASILOMAR), 2011 CONFERENCE RECORD OF THE FORTY FIFTH ASILOMAR CONFERENCE ON, IEEE, 6 November 2011 (2011-11-06), pages 1177-1180, XP032172279, DOI: 10.1109/ACSSC.2011.6190200 ISBN: 978-1-4673-0321-7 proposes as a main idea is to replace the femto-base stations by small base stations that have a (possibly wireless) low-bandwidth backhaul link but high storage capacity. These stations, which we henceforth call caching helpers, or simply helpers, form a. wireless distributed caching infrastructure. The helpers form a wireless distributed caching infrastructure. More concretely, the helpers are placed in fixed positions in the cell and are assumed to have (i) large storage capacity, (ii) localized, high-bandwidth communication capabilities which enable high frequency reuse, and (iii) low- rate backhaul links which can be wired or wireless. It is assumed that the connectivity between UTs and helpers does not change during the transmission of a video file. This requires our users to be fairly static compared to the download time. When, a user requests some file n, it first asks its local helpers, i.e., helpers in the neighborhood of the user in the user-helper connectivity graph. If these local helpers have the requested file, they send it; otherwise, the BS handles the request, incurring a higher delay.

HAI WEI KOONG ET AL: "Cache less for more in information-centric networks (extended version)", COMPUTER COMMUNICATIONS, ELSEVIER SCIENCE PUBLISHERS BV, AMSTERDAM, NL, vol. 36, no. 7, 29 January 2013 (2013-01-29), pages 758-770, XP028526440, ISSN: 0140-3664, DOI: 10.1016/J.COMCOM.2013.01.007 discloses information-centric networking (ICN). In ICN, caching takes place within the network (i.e., routers are equipped with cache stores), requiring line-speed operation. One of the key ICN proposals, content-centric networking (CCN) defines its in-network caching strategy as follows: a router caches every content chunk that traverses it with the assumption that routers are equipped with (large) cache stores or a least recently used (LRU) cache eviction policy is used. The proposed solution is based on the concept of betweenness centrality which measures the number of times a specific node lies on the content delivery paths between all pairs of nodes in a network topology.

BRIEF DESCRIPTION OF THE INVENTION

According to an aspect of the invention, a method is provided as specified in claim 1.

According to an aspect of the invention, an apparatus is provided as specified in claim 6.

According to an aspect of the invention, a computer program product is provided as specified in claim 11.

Some embodiments of the invention are defined in the dependent claims.

LIST OF THE DRAWINGS

In the following, embodiments of the invention will be described in greater detail with reference to the accompanying drawings, in which

Figure 1 presents an example of a radio communication network;
Figure 2 shows a method, according to an embodiment;
Figure 3 shows a social network community operating in a radio access network, according to an embodiment;
Figure 4 depicts how the popular data content may be determined, according to some embodiments;
Figures 5A, 5B and 5C show how data transfer may take place between different entities, according to some embodiments;
Figure 6 illustrates determination of off-peak time periods, according to an embodiment;
Figure 7 shows isolating a user node with malicious content, according to an embodiment;

Figure 8 illustrates a method, according to an embodiment;
Figure 9 illustrates example for determining the influential users, according to some embodiments;
Figure 10 depict a signalling flow diagram, according to an embodiment;
Figure 11 illustrates a method, according to an embodiment; and
Figures 12 and 13 show apparatuses according to some embodiments.

DESCRIPTION OF EMBODIMENTS

The following embodiments are exemplary. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

Embodiments described herein may be implemented in a radio system, such as in at least one of the following: Worldwide Interoperability for Micro-wave Access (WiMAX), Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), highspeed packet access (HSPA), Long Term Evolution (LTE), LTE-Advanced, and/or 5G system. The present embodiments are not, however, limited to these protocols.

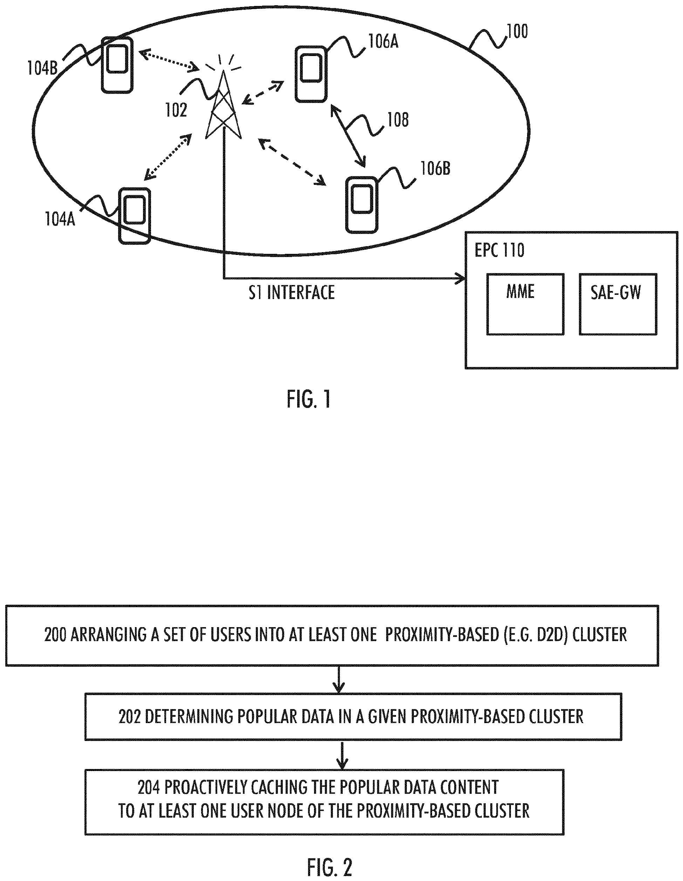

Figure 1 shows an example communication network. Radio communication networks, such as the Long Term Evolution (LTE) or the LTE-Advanced (LTE-A) of the $3^{rd}$ Generation Partnership Project (3GPP), are typically composed of at least one base station 100 providing coverage to a cell 102. Each cell may be, e.g., a macro cell, a micro cell, or a pico-cell, for example. The base station may be evolved node B (eNB) as in the LTE and LTE-A, a radio network controller (RNC) as in the UMTS, a base station controller (BSC) as in the GSM/GERAN, or any other apparatus capable of controlling radio communication and managing radio resources within a cell. In the case of multiple eNBs in the communication network, the eNBs may be connected to each other with an X2 interface as specified in the LTE. The eNB 102 may be further connected via an S1 interface to an evolved packet core (EPC) 110, more specifically to a mobility management entity (MME) and to a system architecture evolution gateway (SAE-GW).

Still referring to Figure 1, the eNB 102 may control a cellular radio communication link established between the BS 102 and terminal devices 104A and 104B located within the cell 100. These communication links marked with dotted arrows may be referred as conventional communication links for end-to-end communication, where the source device transmits data to the destination device via the base station 102 and/or core network. Therefore, for example, the user terminals 104A and 104B may communicate with each other via the base station 102 and EPC 110. The terminal device may be a terminal device of a cellular communication system, e.g. a computer (PC), a laptop, a palm computer, a mobile phone, or any other user terminal or user equipment capable of communicating with the cellular communication network.

In addition to or instead of conventional communication links, direct proximity-based) connections may be established among terminal devices. Examples of proximity-based communications include device-to-device, D2D, communication between user nodes. Other examples of proximity-based communications include direct communications in a cluster (or group) of proximity devices; autonomous D2D communications in cellular network; grid or group of local machines communicating with each other while performing certain tasks in co-operative way; and advanced cellular device acting as a gateway for a number of low-capability devices or machines to access cellular network. One example of implementation possibilities of proximity-based services or applications in machine-type communications (MTC) is a cyber-physical system (CPS). In the CPS, interconnected devices (sensors, actuators, processors, microcontrollers, etc.) embedded in physical objects may communicate with one another or with communications devices, such as multimedia devices.

Direct communication links between two (or more) devices may be established, e.g., between terminal devices 106A and 106B in Figure 1. A direct communication link 108 marked with a solid arrow may be based on any radio technology such that the terminal devices 106A and 106B involved in the direct communication may apply communication according to any of a plurality of radio access technologies. Terminal devices that have established a radio resource control (RRC) connection with the BS 102 may have their proximity-based communication links 108 controlled by the BS 102, as shown with dashed arrows in Figure 1.

However, for the sake of simplicity of the description, let us in the following use the D2D as an example proximity-based communication/service.

As said, file streaming, such as video transfer from the network to the user device, may occupy more than half of the communication capacity nowadays. Another increasingly popular service is social networking with a traffic volume contribution of almost 15%. The users of the social network may seek the data by leveraging their social relationships and ties. For example, a user may detect that a friend in the social network has viewed a music video. Then the user may more likely watch the same music video as well. Also the increased popularity of the social networks contributes to the increased traffic demands.

As one possible approach in meeting these unprecedented traffic demands may be via deployment of small cell networks (SNCs). An SNC may comprise deploying low-power and low-cost small-cell base stations (SBSs) under a larger macro-cellular network. Small cell base stations may provide coverage to, e.g., micro-, pico-, or femto-cells. However, the current state-of-the-art research assumes a reactive networking paradigm, in which users' traffic requests and flows must be served urgently upon their arrival or dropped causing outages. Consequently, there may be situations in which the existing small cell networks have problems in managing peak traffic demands. This problem may become increasingly severe due to the rising number of connected devices (both human and machine type communication), advent of ultra-dense networks, and the massive amount of so-called "big data" which flows across the network. The large-scale solution for the above mentioned problem typically hinges on expensive site acquisition, installation and backhaul costs.

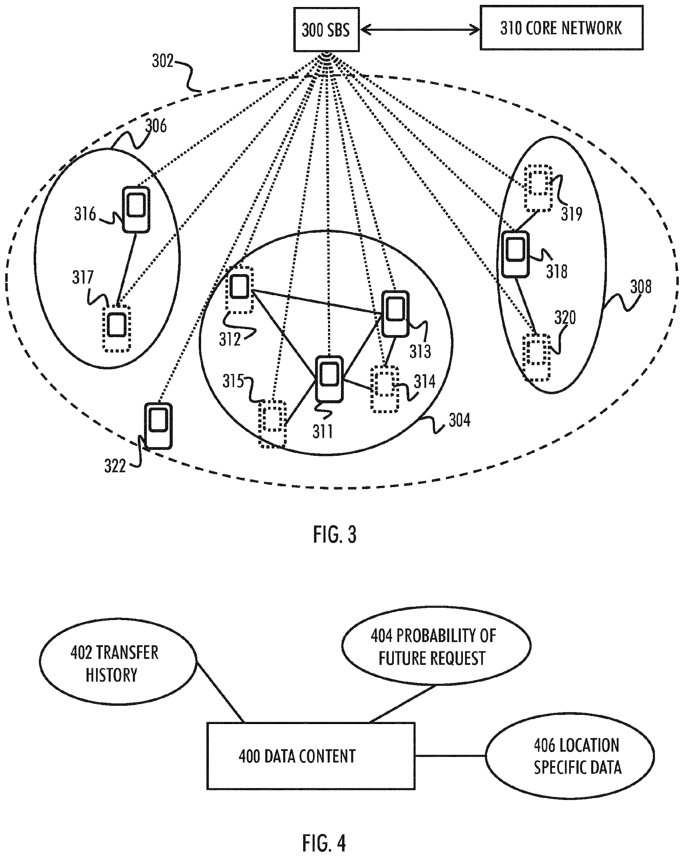

Accordingly, a more sophisticated solution is needed for efficient data transfers. Therefore, it is proposed to utilize the storage capability of the devices, users' context-awareness, and predictions of users' demands in a social network community. As shown in Figures 2 and 3, a network node 300 may in step 200 arrange a set of user nodes 311-322 of a social network community (SNC) 302 into at least one proximity-based cluster 304-308 (e.g. a D2D cluster).

The network node 300 performing the method of Figure 2 may be a base station, such as eNB. In an embodiment, the network node is a small-cell base station (SBS), such as a base station providing coverage to a limited area, which may range from tens of meters within urban and in-building locations to a few km in a rural locations. These types of cells may be called micro-, pico-, or femto-cell, for example. In an embodiment, the network node may be home base station (HeNB). However, for simplicity, let us refer to the network node 300 as SBS throughout the description. The SBS 300 may be connected to the core network 310 for data communication to/from the Internet, for example.

The user node 311-322 may be, e.g., a user device, user equipment (UE), user terminal (UT), computer (PC), laptop, tabloid computer, phablet, cellular phone, mobile phone, communicator, smart phone, palm computer, or any other communication apparatus capable of accessing a network for data transfer. However, for simplicity, let us refer to the user nodes 311-320 as UEs throughout the description. Each UE may be served by the SBS 300, and additionally, also by other base stations, as the case may be.

The social network community (SNC) 302 may comprise networking society, like Facebook, Twitter, Digg, or Instagram, for example. These types of SNCs 302 comprise a large number of users (also known as members) who access the corresponding SNC 302 with the UE 311-320. A member of the SNC 302 may need to identify him/herself to the SNC 302 by inputting identifiers (ID). One SNC 302 may comprise users served by one SBS 300. In such case, the SNC 302 may be called a social network cell community (SNCC). However, in another embodiment, one SNC 302 may comprise UEs under coverage of many SBSs or under many eNBs.

In an embodiment, prior to the formation of the D2D clusters in step 200, the SBS 300 may determine which UEs belong to the SNC 302. This may be possible as the SBS 300 manages the data transfers of the UEs 311-322 and thus the SBSs 300 may know which UEs 311-322 access the social network community 302. For simplicity of Figure 3, it is assumed that all of the UEs 311-322 are part of the SNC 302.

As said, in conventional communication, the traffic between communicating devices is routed via the core network 310 thus increasing the network load, data delay (latency) and base station resource utilization. For providing more "agile" means for communications, in step 200, the SBS may arrange the UEs 311-322 into at least one D2D cluster 304, 306, 308. One motivation to utilize direct communication in a cellular network is to keep local communication local. In a D2D concept, the UEs may communicate directly with each other by utilizing existing cellular network resources. As a result, the direct communication mode assists in avoiding the use of unnecessary core network involvement and thus enhances the base station resource utilization. The SBS 300 may control whether a given UE applies D2D mode or the conventional mode. Further, the SBS 300 may control the resource allocation for the UEs in the D2D cluster communication mode. However, in an embodiment, the UEs in D2D cluster mode may themselves decide how they use the allocated radio resources within the constraints set by the network. Thus, the UEs may determine, e.g., used modulation and coding scheme (MCS) and link adaptation.

In an exemplifying Figure 3, three D2D clusters 304-308 are formed. Each D2D cluster may comprise one or more UEs. The sizes of D2D clusters need not be the same. The UEs of a D2D cluster may be capable of performing D2D communication with each other over the direct D2D communication links, marked with solid arrows between UEs in Figure 3. An UE in the D2D cluster may be simultaneously connected to many UEs locating relatively close and at the same time be connected to the SBS 300. However, there may be UEs 322, which are not part of any D2D clusters and communicate via the SBS 300.

Let us then take a look at how it may be decided which UEs should be selected to the same D2D cluster. In an embodiment, the D2D cluster formation (i.e. D2D clustering) is based on connectivity and/or range proximity.

In an embodiment, all the UEs under one SBS 300 are arranged into one D2D cluster. This may be possible because the SBS 300 coverage area may imply that the UEs served by the SBS 300 are relatively close to each other.

In an embodiment, the UEs under one SBS 300 are arranged into a plurality of D2D cluster 304-308. In an embodiment, each D2D cluster comprises at least one influential UE. The concept of the influential user is described later. This embodiment may decrease the complexity of the system by first arranging the large set of UEs under the SBS 300 into a plurality of relatively small D2D clusters in order to reduce complexity of the subsequent processes.

In an embodiment, the SBS 300 may determine physical distances between different UEs 311-322 and arrange the UEs into the D2D cluster at least partially on the basis of the determined physical distances. For example, if the distance between two UEs is large, then these two UEs may not be able to communicate with each other, and there may not be any reason to put these two UEs in the same cluster.

In an embodiment, the SBS 300 may determine, for each UE 311-322 operating under the SBS 300 (i.e. served by the SBS 300), a probability of communication with another UE via the SNC 302. As a result, the SBS 300 may arrange the UEs into the at least one D2D cluster 304-308 at least partially on the basis of the determined probabilities. For example, UEs with a likelihood of mutual communication being higher than a predetermined threshold may be arranged into one D2D cluster. It may be that each UE in a D2D cluster has a high probability of communicating with any of the other UEs in the D2D cluster. Alternatively, it may be that sequential communication may be probable in the D2D cluster so that a first UE is likely to communicate with a second UE, and the second UE is likely to communicate with a third UE, wherein the first and the third UE need not even be connected and yet assigned to the same D2D cluster.

In an embodiment, the probability determination may be based on social network connections between different UEs. In one embodiment, the SBS 300 may determine an adjacency matrix **A** with respect to UEs operating under the SBS 300, wherein the adjacency matrix **A** indicates connections between different UEs 311-322. For example, the connections between the N user nodes 311-322 may be described by the adjacency (or connectivity) matrix **A** having a size of N x N. An entry $A_{ij}$, i, j = 1, ..., N equals 1 if a link between user nodes i and j exists, and 0 otherwise.

Typically, four centrality metrics may be derived from the adjacency matrix A: 1) 'Degree Centrality', to represent the number of ties a node has with other nodes; 2) 'Closeness Centrality', to represent the distance between a node and other nodes; 3) 'Betweenness Centrality', which represents the extent to which a node lies on the shortest paths linking to other nodes; and 4) 'Eigenvector centrality', which estimates the influence of nodes in the SNC 302 by using the eigenvector corresponding to the largest eigenvalue of the adjacency matrix **A** of the network. Utilizing the indications of at least one of the centrality metrics, the SBS 300 may derive the communication probability between any two user nodes i and j, which can also be seen as the weight of the link between user i and user j. In this manner, the probabilities of the communication between any two user nodes may be taken into account when arranging the users into the D2D cluster(s) 304-308.

In an embodiment, it may be decided that a probability that a given UE 322 accesses the SNC 302 or request any data content is below a predetermined probability threshold. Then it may be decided that the UE 322 is not arranged to any of the D2D clusters 304-308.

In step 202, the SBS 300 may determine popular data content in a given proximity-based cluster (e.g. in the D2D cluster 304). In an embodiment, the popular data content needs to fulfill a predetermined popularity criterion. Any data content may comprise e.g. a video file, an audio file, or a text file, for example.

In step 204, the SBS 300 may then proactively cache the popular data content to at least one UE 311-315 of the given D2D cluster 304 in order to enable UEs 311-315 in the D2D cluster 304 to transfer the popular data content via the direct proximity-based communication between the user nodes. Thus, the proactive caching of step 204 is applied by storing popular files within the D2D clusters 304-308. A given D2D cluster 304 may have different popular data content than another D2D cluster. Thus, a given D2D cluster may cache (in one of the respective UEs) different data content than another D2D cluster. The caching may take into account the storage constraints at the user side. Caching may denote storing the data into a memory, at least temporarily. Caching the popular data content to at least one UE 311-315 may denote the SBS 300 transferring the popular data content to the respective UE for storage.

Let us look at step 202 in which the SBS 300 may determine the popular data content 400. It is known e.g. from statistical analysis, that users of the SNC 302 tend to value highly recommended contents by friends or people with similar interests and are also likely to recommend it. It may be appreciated also that the SBS 300 may detect a device identity information, ID (e.g. a medium access control (MAC) ID), of the accessing UE 311-322. The SBS 300 may further control and manage the devices 311-322 access to the core network 310 and in this way know what data has been transferred to which devices.

In an embodiment, as shown in Figure 4, the SBS 300 may determine the popular data content 400 at least partially on the basis of transfer history of data contents in the D2D cluster 304. For example, the predetermined popularity criterion may require that popular data content has been transferred at least a predetermined number of times in the D2D cluster 304, as shown with block 402 in Figure 4. A high number of transfers may imply popular data content, thus making it likely that it will be requested in the near future as well. However a low number of transfers may imply less popular data content, thus making it less likely that it will be requested in the near future. The predetermined number of transfer times may be based on empirical data or mathematical simulations, for example.

In an embodiment, the determined popular data content is the most transferred data content in the given D2D cluster. This may be determined from the transfer history, for example.

In an embodiment as indicated in block 404 of Figure 4, the SBS 300 determine, for a given data content, a transfer probability indicating how probable it is that the data content will be downloaded in a given D2D cluster. Thereafter, the SBS 300 may determine the popular data content at least partially on the basis of the transfer probability. There may be a pre-set probability threshold, which needs to be exceeded before the given data content fulfils the predetermined popularity criterion. The probability may indicate how probable it is that the data content will be downloaded within a time window. The time window may be predefined.

In an embodiment, regarding the determination of how probable it is that the given data content will be downloaded in a given D2D cluster, let us define the number of users as N and the total number of contents by F. Given the large volume of contents available, it may be assume that $F = F_0 + F_H$, in which $F_H$ represents a set of contents with history (such as viewing history) and $F_0$ is a set of contents without history. The probability that content/file f among F is selected by a given user may be assumed to follow a Beta distribution (i.e., prior probability). Thus, the selection result of user n (out of users N) may be defined as the conjugate probability of the Beta distribution and to follow a Bernoulli distribution. With that in mind, the resulting user-file partition may be reminiscent to that of the Chinese restaurant process (CRP). Therefore, in an embodiment, the transfer probability is based on the CRP.

As known by a skilled person, the CRP may be based upon a metaphor in which the objects are customers in a restaurant, and the classes are the tables at which they sit. In particular, in a restaurant with a large number of tables, each with an infinite number of seats, customers enter the restaurant one after another, and each chooses a table at random. In the CRP with parameter β, each customer chooses an occupied table with a probability proportional to the number of occupants, and chooses the next vacant table with probability proportional to β. This process continues until all customers have seats, defining a distribution over allocations of people to tables.

Mirroring this process to the current case, it may be assumed that the SNC 302 represents the Chinese restaurant, the plurality of data contents represents the large number of seats, and the users represent the customers. Thus, the data contents dissemination process may be predicted online by the CRP analogy. That is, for example within the D2D cluster 304, UEs 311-315 sequentially request to download a given data content, and when a user downloads the data content, the transfer is recorded (e.g. in order to form data transfer history). In turn, this transfer action affects the probabilities that this data content will be requested by others users within the same D2D cluster. In other words, the popular data contents may be requested more frequently and new data contents less frequently.

It may be shown that:

$$P(Z) = \frac{\beta^{F'}\Gamma(\beta)}{\Gamma(\beta+N)} \prod_{f=1}^{F'}(m_f - 1)! \tag{1}$$

where $Z_{N \times F}$ is a random binary matrix indicating which contents are selected by which users, where $Z_{nf} = 1$ if user n selects content f and 0 otherwise. Annotation $\Gamma(.)$ denotes the Gamma function, $m_f$ is the number of users currently assigned to content f (or viewing history) and F' is the number of partitions with $m_f > 0$.

Thus, P(Z) indicates the probability distribution function of the random variable Z. For example, a high probability indicates that the content dissemination process in the D2D cluster is according to the given matrix Z. This may indicate which content is popular and which is not as popular.

In this way the probability that a given user (i.e. UE) requests a given content inside his/her D2D cluster may be derived. For example, assuming the CRP with the parameter β, each user chooses a given data content with a probability proportional to the data transfer history within the D2D cluster, and then chooses another content (with no data transfer history) with a probability β. For example, a first user may choose a first content with probability β/β= 1. A second user then chooses the first content with a probability 1/(1+β) and a second content with a probability β/(1+β). After the second user chooses the second content, a third user may choose the first content with a probability 1/(2+β), the second content with a probability 1/(2+β) and a third content with a probability β/(2+β). The process may continue until all users theoretically have the contents, thus defining a distribution over allocations of users to data contents. Therefore, the decisions of subsequent users are influenced by the previous users' data content download decisions. In this manner, the file popularity distribution may be determined for each cluster 304-308, wherein this distribution (a.k.a. the transfer probability) may be used in determining the popular data content (a.k.a. strategic data content) in the D2D clusters 304-308.

In an embodiment, as indicated in the block 406 of Figure 4, the SBS 300 may determining the popular data content at least partially on the basis of associations of data contents to at least one characterizing feature of the physical location of a given D2D cluster 304-308. There may, e.g. be certain type of restaurants, shops, public places, libraries in the location of the D2D cluster. For example, if the D2D cluster 304 is formed around a sunglass store, it may be required that the popular data content is associated to the sunglasses, such as advertisements of the sunglass store.

It may be appreciated that each D2D cluster may have different content to be cached, depending on the social relationships and social network activity of the users attached to the corresponding D2D cluster. Similarly, different social network cell communities (that is, users served by different SBSs) may have different data contents that are cached.

As a result, in step 204, the popular data contents 400 may be pre-allocated (proactively cached) in the memory of at least one of the users in each D2D cluster 304-308. Looking from the point of view of the D2D cluster 304, such proactive caching denotes that the popular data content 400 may be downloaded to the at least one UE 311-315 of the D2D cluster 304. The UE, e.g. the UE 311, may store the popular data content in its memory for a predetermined time period. The UE 311 may, upon request, disseminate the popular data content within the corresponding D2D cluster 304 via the D2D communication links to at least one requesting UE 312-315. As a result, peak traffic demands may be alleviated from the point of view of the SBS 300, thus easing backhaul congestion and yielding considerable network savings.

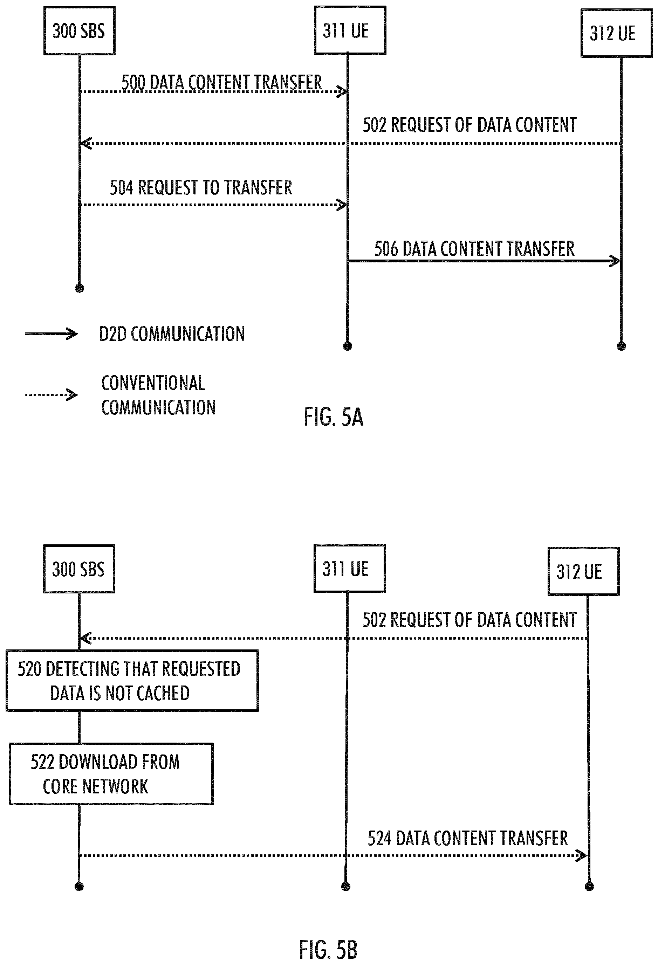

As an example, let us in the following assume that the data content 400 is cached to the UE 311 of the D2D cluster 304 including also the UEs 312-315. With respect to Figure 5A, let us assume that the SBS 300 has decided to cache the popular data content 400 (e.g. video file) to the UE 311. Thereafter, in step 500, the SBS 300 uploads the video file 400 to the UE 311 and the UE 311 stores the video file 400 in its memory. Later on, the user of the UE 312 of the same D2D cluster 304 decides that he/she wishes to watch the video 400 himself/herself. This may be because the UE 311 (or some other UE) has posted a link to the video file 400 in the SNC 302 or because the user of the UE 312 for some other reason wishes to view the video file 400. Thereafter, in step 502, the UE 312 places a request to the SBS 300 to download the video file 400 from the core network 310.

When a given UE 312 requests the video file 400, the SBS 300 may determine whether one of the UEs 311, 313-315 of the D2D cluster 304 has the requested file 400 in its memory. In this case, the video file 400 has already been proactively cached to the UE 311. Thus, in step 504, the SBS 300 may direct the UE 311 to transfer the file 400 to the requesting user 312 via the D2D communication link between UEs 311 and 312, instead of the SBS 300 accessing the core network 310. This step 504 may also comprise the SBS 300 allocating D2D radio resources to the UEs 311, 312, unless the radio resources needed by the D2D cluster 304 have already been allocated to the D2D cluster 304 in the formation of the D2D clusters 304-308. In step 506, the UE 311 may then transfer the video file 400 to the requesting UE 312.

In an embodiment, the UE 312 may broadcast a request to the D2D cluster first, before requesting the data content 400 from the SBS 300. In this way, the UE 311 may detect that the UE 312 needs the data content 400 which is cached by the UE 311. Thus, the UE 311 may transmit the data content 400 to the UE 312 without receiving a request to this end from the SBS 300.

In yet one alternative embodiment to Figure 5A, the UE 312 may know beforehand which UEs 311, 313-315 of the respective D2D cluster 304 are caching which data contents. This may be known from detected data transfers in the D2D cluster 304. Thus, based on the detected data transfers, the UE 312 may have detected that UE 311 caches the desired data content 400. Therefore, the UE 312 may directly ask the UE 311 to transfer the data content 400 to the UE 312. This may provide fast reception of the data content 400.

However, in order to maintain the SBS 300 control in the D2D cluster 304 operating under the SBS 300, it may be beneficial for the UE 311 to wait for the transfer command from the SBS 300 before making the transfer, as depicted in Figure 5A.

However, let us look at an embodiment in which the popular data content 400 is not cached to any of the UEs 311-315 of the D2D cluster 304. In such case, the SBS 300 may, in step 520, detect that the popular data content 400 requested by the UE 312 of the D2D cluster 304 is not cached in any of the UEs of the D2D cluster 304. Consequently, the SBS 300 may in step 522 download the popular data content 400 from the core network 310 and in step 524 transfer the file 400 directly to the requesting user 312. Thus, this solution represents a fall-back solution in case the data content 400 has not been proactively cached or the cached data content 400 has already been removed from the UE 311 (e.g. upon expiry of a predetermined time period).

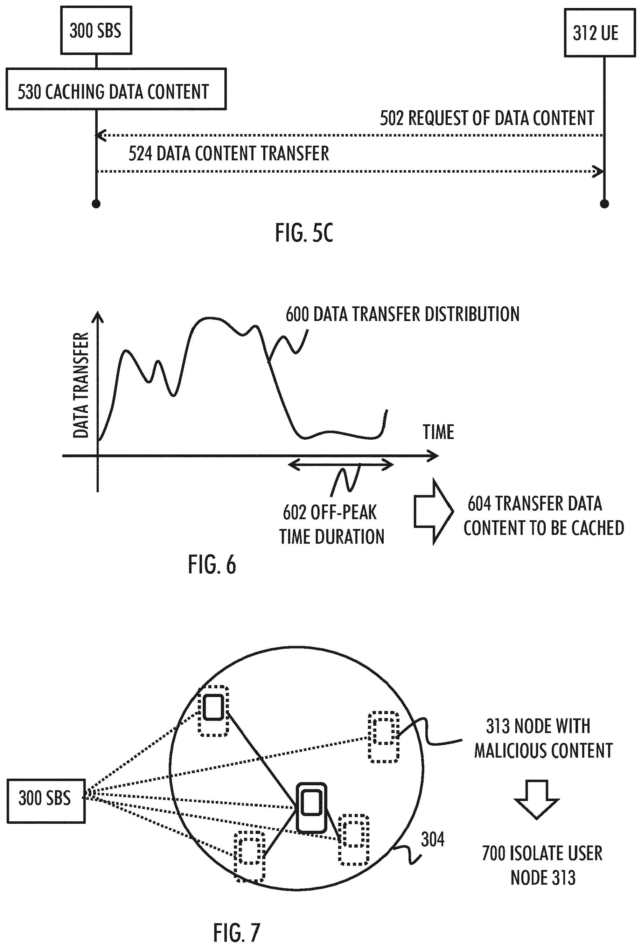

In yet one embodiment, as shown in Figure 5C, the SBS 300 may in step 530 cache the popular data content 400 to the SBS 300 itself. This type of caching may be performed alternatively or in addition to the caching in the UE(s) 311-315 of the D2D cluster 304. This may be advantageous as the storage capacity of the SBS 300 may be larger than the storage capacity of the mobile UEs 311-315 of the D2D cluster 304. Thereafter, the SBS 300 may, as a response to a request of the popular data content 400 from the UE 312 of the D2D cluster 304, transfer in step 524 the popular data content 400 to the requesting UE 312. Thus, the SBS 300 need not fetch the data 400 from the core network 310 upon receiving the data content request from the UE 312, because the SBS 300 has done so earlier and cached the popular video file 400 to the memory of the SBS 300 itself.

In yet one embodiment, the requesting UE 312 may be served simultaneously from the SBS 300 and the UE 311 according to the available link capacities. This may further expedite the data content reception by the UE 312. The SBS 300 may serve the UE 312 from the cached content or by requesting the data content from the core network 310.

Thus, the proposals of Figures 5A and 5C can be seen to be proactive in essence and are based on network nodes (e.g., base stations) exploiting users' context information and predicting/anticipating users' demands in order to achieve resource savings without jeopardizing quality-of-service/experience (QoS/QoE) requirements and cost/energy expenditures. The predictive framework may rest on the notion that information demand patterns of mobile users are, to a certain extent, predictable. Such predictability can be exploited to minimize the peak load of cellular networks, by proactively pre-caching desired information 400 to selected users before they actually request it. This may be important when a plurality of users 311-322 request certain files with a time deadline. The classical way is to get the files from the core network 310, which may result in violating the respective dead-lines. The proposed approach may cache the content at the network edge (e.g. at the UE(s) and/or SBS 300) instead and serve the requesting UE(s) directly from the network edge. This may help in meeting the time deadline.

Additionally, the proposed proactive caching procedure exploits storage capabilities and social relationships of the UEs 311-322 to minimize peak mobile data traffic demands. The proposal is proactive in the sense that it does not wait until the users 311-322 request the data content 400 but anticipates the users data requests and caches the popular data content 400 (which is expected to be requested by the UE(s)) in at least one UE(s) 311-322 and/or in the SBS 300. This caching takes place before the request is even received from a given user. This may smoothen out the peak traffic demands, while still satisfying user quality requirements.

In an embodiment, the SBS 300 may detect data transfer distribution with respect to time. As said, the SBS 300 may manage the data transfers in the cell and is thus capable of determining when and how much data is being transferred in the cell. Let us assume that the data transfer distribution is shown in Figure 6 with reference numeral 600. Next the SBS 300 may determine off-peak time durations 602 on the basis of the data transfer distribution. For example, assuming the time window of Figure 6 represents 24 hours, night time may represent an example of an off-peak time duration in the cell. There may be more than one off-peak time duration/period. In step 604, the SBS 300 may decide to cache the popular data content 400 to the at least one UE 311 during the off-peak time duration 602. This may be beneficial as then the data transfer in time domain may be distributed more evenly and the transfer of the popular data 400 is not needed from the SBS 300 during the peak transfer times (e.g. during the day times). Thus, leveraging the processing capabilities and memory storages of the UEs 311-322 may enable the network operators to proactively serve predictable peak-hour requests during off-peak times.

In an embodiment, the SBS 300 may cause a deletion of the cached data content 400 from the UE 311 after an expiry of a predetermined time period. This may be beneficial in order to release the cache of the UE 311 to other purposes. The time period may be pre-set. It may be determined that the popular data content request(s) from at least one other UE 312-315 of the D2D cluster 304 is expected to be received within the predetermined time period. In case any request is not received, the popular data content 400 may nevertheless be flushed from the UE 311. The time period for the expected data transfer requests may be determined on the basis of the CRP, for example.

Additionally, in an embodiment, the data content 400 may be flushed after an expected data transfer requests with respect to the cached data content has been received. This expected data transfer requests may be determined on the basis of the CRP, for example, or on the basis of the D2D cluster size, for example. The SBS 300 may inform the UEs (to which the data 400 is cached) how long the UE is to cache the data content 400, or inform how many data content requests need to be served before flushing the cached data content 400. Flushing the memory of the UEs 311-322 from the cached data content 400 may be important due to limited storage capacity of the memory of the UEs 311-322.

In an embodiment, as shown in Figure 7, the further SBS 300 may detect that a given UE 700 comprises malicious data content. This may be detected by the SBS 300 as the SBS 300 may handle the data transfers to/from that node 313 to/from the core network 310. The SBS 300 may, e.g. check the data with a virus or malware scanner. As a response to the detection, the SBS 300 may, in step 700, prevent a connection establishment from that UE 313 to another UE. The isolation may be such that the UE 313 is not allowed to be a member of any D2D cluster. In another embodiment, the UE 313 is not allowed to be a member of the SNC 302. The SBS 300 may further send a notification to the UE 313 that it may contain some malicious data content and ask the UE 313 to run virus/malware software to remove the malicious content.

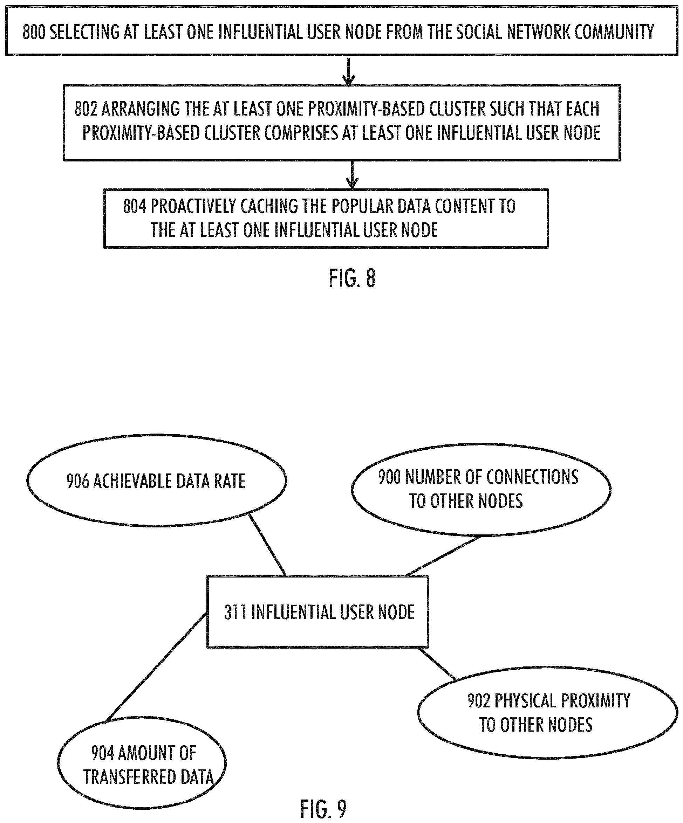

Let us then look at one embodiment with reference to Figure 8. In step 800, the SBS 300 may select at least one influential UE from the SNC 302. It may be required that each influential UE fulfils a predetermined influence criterion. In step 802, the SBS 300 may arrange the at least one D2D cluster such that each D2D cluster comprises at least one influential UE. Further, in step 804, the SBS 300 may proactively cache the popular data content 400 to the at least one influential UE.

Thus, instead of caching the data content 400 proactively to at least one UE 311-315 of the D2D cluster 304, the caching UE may be selected more sophistically so that the influential UE(s) cache the popular data content 400. This may be beneficial as the influential users, as will be explained, may the users who are well connected in the SNC 302 and may thus reach many other members of the SNC 302. As such, the steps 800-804 may, in an embodiment, at least partially substitute the steps 200 and 204 of Figure 2.

It may be useful to find influential users for caching data content 400, as it may provide a possibility for the SBS 300 to avoid the need to multicast the data content to a plurality of UEs in the D2D cluster. Instead, the SBS 300 may send the data content 400 to one influential UE. This may provide savings in bandwidth and more efficient resource allocation, for example.

In the example of Figure 3, the influential users 311, 316 and 318 are marked with solid lines whereas non-influential users are marked with dotted lines. These UEs are the ones that are best connected in the respective D2D cluster. In an embodiment, these influential users may be seen as cluster heads in the respective D2D clusters 304-308. However, each cluster 304-308 may comprise more than one influential user, although not shown in Figure 3.

In order to determine a set of influential users, we may exploit social relationships and ties among users by using the notion of centrality metric. Thus, in one embodiment, the SBS 300 may determine the adjacency matrix A with respect to UEs operating under the SBS 300, wherein the adjacency matrix A indicates connections between different UEs 311-322. As indicated earlier, one or more of the possible centrality metrics ('Degree Centrality', 'Closeness Centrality', 'Betweenness Centrality', and 'Eigenvector centrality') may be derived from the adjacency matrix A.

SBS 300 may determine the influential UEs on the basis of centrality metric of the adjacency matrix A. In an embodiment, the eigenvector centrality may be used for detecting the set of influential users. Let us look at closer on how to derive the eigenvector centrality metric. Let us assume that there are N user nodes 311-322 under the SBS 300, thus yielding the adjacency (or connectivity) matrix A having a size of N x N. Suppose that the eigenvalues of A are $\lambda_1$, ..., $\lambda_N$ in decreasing order and the corresponding eigenvectors are $v_1, ...v_N$. Then, the eigenvector-centrality may be based on the eigenvector $v_1$ which corresponds to the largest eigenvalue that is $\lambda_1$. This may indicate the influential user node(s) in the SNC 302 under the SBS 300. These influential users may be users having good or numerous social connections, users with a plurality of followers in the SNC 302, such as in the Facebook or Twitter, leaders in the SNC 302 etc.. In an embodiment, a clustering method (such as K-means clustering) may then be applied on this vector for the D2D clusters formation in step 802.

Let us next with reference to Figure 9 take a look at some examples on how to select the influential users.

In an embodiment, as indicated in block 900, the SBS 300 may select a given user node as an influential user node at least partially on the basis of a number of connections the given user node have to other user nodes in the social network community. For example, the predetermined influence criterion may require that an influential UE has at least a predetermined number of connections to other users in the SNC 302. This may be derived from the adjacency matrix A, for example.

In an embodiment, as indicated in block 902, the SBS 300 may select a given user node as an influential user node at least partially on the basis of a number of user nodes in physical proximity to the given user node. For example, the predetermined influence criterion may require that at least a predetermined number of UEs 311-322 of the SNC 302 are physically located in proximity of an influential UE. Thus, the SBS 300 may detect the physical distances between different UEs 311-322 and compare the distances to a predetermined proximity threshold so as to detect how many UEs are in proximity of a given candidate influential UE.

In an embodiment, as indicated in block 904, the SBS 300 may select a given user node as an influential user node at least partially on the basis of the amount of data the given user node has transferred within a time window. For example, the predetermined influence criterion may require that an influential UE has transferred at least a predetermined amount of data within a time window. This may imply that the candidate influential UE is active in the SNC 302 and typically active users are well connected to the SNC 302. The time window may be predefined to represent the activity of the user in the social community. The determination of the time window may take into account the type of the SNC 302, for example.

In an embodiment, as indicated in block 906, the SBS 300 may select a given user node as an influential user node at least partially on the basis of data transfer capabilities of the given user node. For example, the predetermined influence criterion may require that an influential UE is capable of transferring data at least at a predetermined transfer rate. This may ensure that the selected UE provides fast data transfers for the caching and for the D2D communications. For example, an UE with LTE/5G capabilities may be favoured over 3G capable UE.

In an embodiment, the predetermined influence criterion requires that the storage capacity of an influential UE exceeds a predetermined storage threshold. This may be to ensure that the storage space does not run out easily.

Thus, as described above, in some embodiments, the influential users may be selected on the basis of past activity of the users in the SNC 302 (transfers, file requests, etc.), the capabilities of the UE associated with the influential user, locations of the users in the cell of the SBS 300, predicted activity of the users, for example.

It should be appreciated that the predetermined number of connections, the predetermined number of UEs, the predetermined proximity threshold, the predetermined amount of data, and the predetermined transfer rate may be based on empirical or mathematical analysis such that the selection of the influential user(s) is beneficial to the transfer requirements (e.g. latency, QoS, QoE) of the proposed system.

In an embodiment, the SBS 300 may check an allowance indicator of a given UE, wherein the allowance indicator indicates whether or not the given UE allows the monitoring of the social network behaviour. As a result, the SBS 300 may decide whether or not to utilize the social network behaviour information of that UE in determining which data content is to be cached in which user nodes. For example, upon detecting that the UE allows to the monitoring of the social network behaviour, the SBS 300 may decide to take this UE's behaviour in the SNC 302 into account in the step of determining the popular data content 400. However, upon detecting that the UE does not allow the monitoring of the social network behaviour, SBS 300 may decide not to take this UE's behaviour in the SNC 302 into account in the step of determining the popular data content 400.

In an embodiment, the allowance indicator, indicting the allowance to build social ties among users, may be set in the users' profile information in the SNC 302. In an embodiment, this may be detected during a normal subscriber assignment and/or when the user registers as a D2D user. In an embodiment, there is a general allowance for all type of social tracking/monitoring. In another embodiment, the allowance indicator indicates allowance for only limited tracking among a predefined set of users (e.g. among his/her D2D cluster). As a result, the SBS 300 may detect that tracking/monitoring is possible only for sub-set of users among the users of the SNC 302 under the SBS 300. A user node may dynamically change the allowance e.g. from general to limited or vice versa, or set further limitations, e.g. add users or remove users among which the monitoring is allowed.

In an embodiment, the SBS 300 may check whether or not a given UE allows the inclusion of that UE into the D2D cluster. Thereafter, the SBS 300 may arrange the users 311-322 into the at least one D2D cluster 304-308 at least partly on the basis of the check.

In an embodiment, the SBS 300 may take into account the allowance indicators when starting the procedure for the proactive caching. For example, the SBS 300 may request a confirmation for the social tracking of a given UE from the general registration or D2D registration entity or even UEs which are forming the D2D cluster/group. The confirmation may be requested when setting up the D2D group. Further, the confirmation may be enquired when a new user is joining to the D2D group.

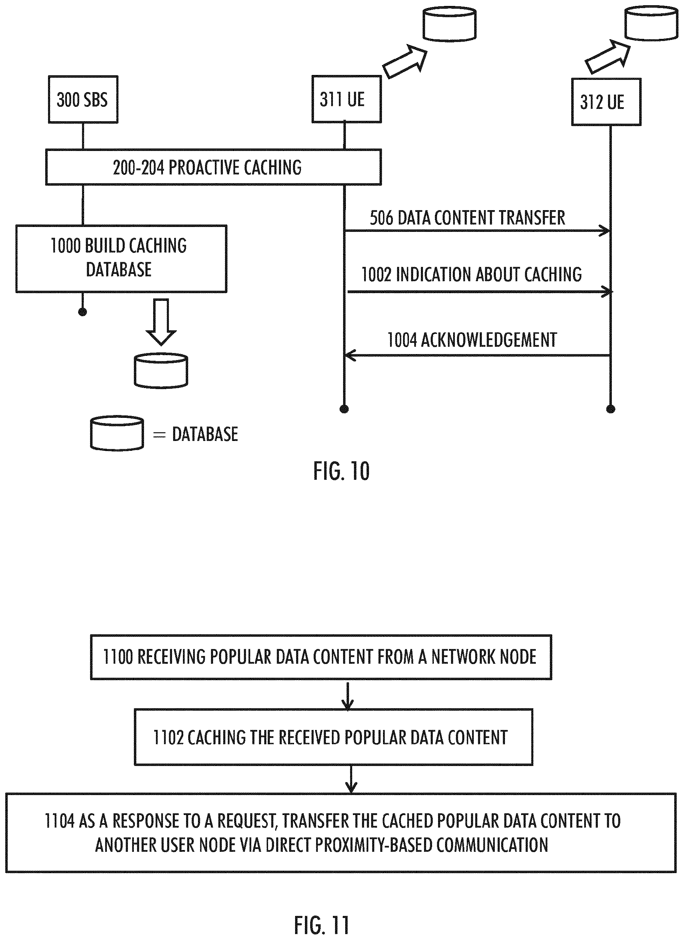

In an embodiment, as shown in Figure 10, the SBS 300 may generate in step 1000 a caching database indicating which data content is cached in which UE(s). The UEs 311-322 may generate their own databases based on that. For example, the SBS 300 and/or the UEs 311-322 may keep a track on content cached by each user node by using a list or table format. The list may contain a mapping between at least two of the following: the cached data content, the caching node, and the social community with which the cached data is associated.

In an embodiment, the SBS 300 and/or the UEs 311-322 may piggyback a notice relating to the delivered data content 400 indicating that the sender is caching that data content 400 so that receivers may keep a track which data content 400 is cached in which entity/node. This is shown in Figure 10 by the UE 311 transmitting an indication 1002 indicating that it is caching the transferred data content 400. The data content transmission 506 and the indication 1002 may be comprised in one message. Thus, in an embodiment, the caching database(s) may be generated on the basis of detections of data content transmissions, each comprising information indicating which data content is transmitted between which user nodes.

In one embodiment, the SBS 300 and/or the UEs 311-322 may transmit an acknowledgment (ACK) message 1004 towards transmitters, wherein the ACK message informs the transmitters that the receivers have received the transmitted data content 400. For example, in case of Figure 10, the UE 312 may transmit the ACK 1004 to the UE 311. The ACK 1004 may also carry the indication that the receiver 302 is now caching the received data content 400. Thus, in an embodiment, the caching database(s) may be generated on the basis of detections of acknowledgement messages, each indicating that a receiving user node has received a given data content.

Hence, the caching database may be at least partially based on at least one of these messages 1002, 1004. By detecting the messages 1002 and/or 1004, the SBS 300 or a UE may be able to form a map of the entities where different content for different social communities are cached.

In an embodiment, the transmitting device may also record which data content 400 is transmitted to whom so as to contribute to the database generation.

Looking from the point of view of the mobile device, such as the UE 311, the UE 311 may, in step 1100 of Figure 11, receive the popular data content 400 from the network node 300. Then the UE 311 may cache the received popular data content 400 (at least for a predetermined time period) in step 1102. In step 1104, the UE 311 may, as a response to a request, transfer the cached popular data content 400 to another user node (e.g. to node 312) via the direct proximity-based communication (e.g. D2D link). The request may be received, e.g. from the SBS 300.

Thus, the proposed solution may enable mobile network operators to build intelligence into their existing radio access networks, wherein network nodes 300 track, learn and build users' demand profiles to predict future requests, leveraging devices' capabilities and the vast amount of available data. It may not be always possible to collect enough data from a single user to predict her/his patterns precisely enough. To overcome this challenge, other users' data as well as their social relationships can be leveraged to build reliable statistical models/patterns. By exploiting the derived statistical traffic patterns and users' context information (i.e., file popularity distributions, location, velocity and mobility patterns), the proposed paradigm may provide an option to better predict when data contents are requested and by whom, and at which network locations should contents be pre-cached.

In the following, examples of apparatuses suitable for carrying out embodiments described above in relation to Figures 2 to 11 are presented.

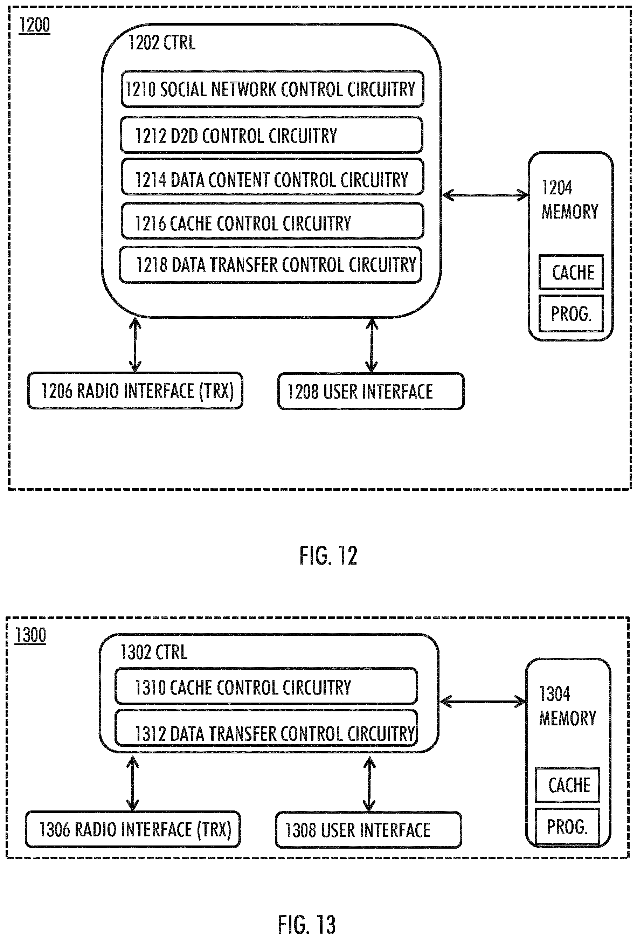

Figures 12 and 13 provide apparatuses 1200, 1300 comprising a control circuitry (CTRL) 1202, 1302, such as at least one processor, and at least one memory 1204, 1304 including a computer program code (PROG), wherein the at least one memory and the computer program code (PROG), are configured, with the at least one processor, to cause the respective apparatus to carry out any one of the embodiments described.

The memory 1204, 1304 may be implemented using any suitable data storage technology, such as semiconductor based memory devices, flash memory, magnetic memory devices and systems, optical memory devices and systems, fixed memory and removable memory. The memories 1204, 1304 may have space for caching the popular data content 400, as described above.

The apparatuses 1200, 1300 may further comprise communication interfaces (TRX) 1206, 1306 comprising hardware and/or software for realizing communication connectivity according to one or more communication protocols. The TRX may provide the apparatus with communication capabilities to access the radio access network, for example.

The apparatuses 1200, 1300 may also comprise user interfaces 1208, 1308 comprising, for example, at least one keypad, a microphone, a touch display, a display, a speaker, etc. Each user interface may be used to control the respective apparatus by the user.

In an embodiment, the apparatus 1200 may be or be comprised in a base station (also called a base transceiver station, a Node B, a radio network controller, or an evolved Node B, for example). In an embodiment, the apparatus 1200 is or is comprised in the network node 300.

The control circuitry 1202 may comprise a social network control circuitry 1210 for determining the members of the SNC 302, for detecting connections between different members of the SNC 302, for example. A D2D control circuitry 1212 may be responsible of allocating resources for the D2D cluster 304-308, for deciding which users are allocated to which D2D clusters, etc. A data content control circuitry 1214 may be for determining the popular data content 400, for example. A cache control circuitry 1216 may be for controlling the caching of the popular data content 400, if needed. A data transfer control circuitry 1218 may be for determining whether to download requested data content from the core network 310 and convey the data content to the requesting UE, or whether to ask one of the UEs to use the D2D communication link to transfer the data content to the requesting user (in case one of the UEs cache the requested data content.

In an embodiment, apparatus 1300 may comprise a terminal device of a cellular communication system, e.g. a user device, user equipment (UE), user terminal (UT), computer (PC), laptop, tabloid computer, cellular phone, mobile phone, communicator, smart phone, palm computer, phablet, or any other apparatus suitable for communications. Alternatively, the apparatus 1300 is comprised in such a terminal device. Further, the apparatus 1300 may be or comprise a module (to be attached to the apparatus) providing connectivity, such as a plug-in unit, an "USB dongle", or any other kind of unit. The unit may be installed either inside the apparatus or attached to the apparatus with a connector or even wirelessly. In an embodiment, the apparatus 1300 may be, comprise or be comprised in a mobile phone, such as one of the UEs 311-322.

The control circuitry 1302 may comprise a cache control circuitry 1310 for controlling the caching of the popular data content 400. A data transfer control circuitry 1312 may be for transferring the cached data content 400 to another UE in the same D2D cluster via the D2D communication links. The data transfer control circuitry may further control receiving of the data content to be cached. The control circuitry 1302 may further comprise a D2D control circuitry (although not shown) for participating in the establishment of the D2D communication between the apparatus and a user terminal.

As used in this application, the term 'circuitry' refers to all of the following: (a) hardware-only circuit implementations, such as implementations in only analog and/or digital circuitry, and (b) combinations of circuits and soft-ware (and/or firmware), such as (as applicable): (i) a combination of processor(s) or (ii) portions of processor(s)/software including digital signal processor(s), software (computer program codes or portions thereof. A computer program or a computer program product may comprise one or more computer-executable components which, when the program is run, are configured to carry out embodiments.), internal and/ or external memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

Another example of an apparatus comprises means (1202) for arranging a set of user nodes of a social network community into at least one proximity-based cluster, means (1202) for determining popular data content in a given proximity-based cluster, and means (1202) for proactively caching the popular data content to at least one user node of the proximity-based cluster, in order to enable the user nodes in the proximity-based cluster to transfer the popular data content via direct proximity-based communication between the user nodes.

Yet another example of an apparatus comprises arranging means for arranging (such as a social network control circuitry 1210) a set of user nodes of a social network community into at least one proximity-based cluster, determining means (such as a data content control circuitry 1214) for determining popular data content in a given proximity-based cluster, and storing means (such as a cache control circuitry 1216 and/or memory 1204) for proactively caching the popular data content to at least one user node of the proximity-based cluster, in order to enable the user nodes in the proximity-based cluster to transfer the popular data content via direct proximity-based communication between the user nodes.

Yet another example of an apparatus comprises means (1312) for receiving (or controlling receiving) popular data content from a network node, means (1310) for caching the received popular data content, and means (1312) for, as a response to a request, transferring the cached popular data content to another user node via direct proximity-based communication.

Yet another example of an apparatus comprises receiving means (such as data transfer control circuitry 1312) for receiving (or controlling receiving) popular data content from a network node, storing means (such as a cache control circuitry 1310 and/or memory 1304) for caching the received popular data content, and means (such as a data transfer control circuitry 1312) for, as a response to a request, transferring the cached popular data content to another user node via direct proximity-based communication.

The techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. For firmware or software, the implementation can be carried out through modules of at least one chip set (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

Embodiments as described above may also be carried out in the form of a computer process defined by a computer program or portions thereof. The computer program may be in source code form, object code form, or in some intermediate form, and it may be stored in some sort of carrier, which may be any entity or device capable of carrying the program. For example, the computer program may be stored on a computer program (distribution) medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. Coding of software for carrying out the embodiments as shown and described is well within the scope of a person of ordinary skill in the art.

Even though the invention has been described above with reference to an example according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. A method, comprising:

    arranging (200), by a network node, a set of user nodes of a social network community into at least one proximity-based cluster based on connectivity and/or range proximity of the user nodes;
    determining (202) at least one popular data content in the at least one proximity-based cluster based on a probability of a request for the at least one data content, wherein the probability is proportional to a number of data content transfer times in the at least one proximity-based cluster and/or based on data content related associations to at least one characterizing feature of the physical location of the at least one proximity-based cluster, and
    in response to the determining, carrying out (204) proactive caching of the at least one popular data content in at least one of the user nodes in the at least one proximity-based cluster and/or in the network node before the at least one popular data content has been requested.

2. The method of claim 1, wherein the arranging the set of the user nodes of the social network community into the at least one proximity-based cluster further comprises:

selecting at least one influential user node from the social network community, and
arranging the at least one proximity-based cluster such that each proximity-based cluster comprises the at least one influential user node, wherein the at least one of the user nodes wherein the at least one popular data content is proactively cached is the at least one influential user node.

3. The method of claim 2, wherein the selecting the at least one influential user node further comprises:

determining an adjacency matrix with respect to user nodes operating under the network node, wherein the adjacency matrix indicates connections between the user nodes, and
determining the at least one influential user node based on centrality metric of the adjacency matrix.

4. The method of claim 2 or 3, wherein the selecting the at least one influential user node further comprises:

selecting a given user node as an influential user node based, at least partially, on a number of connections the given user node has with other user nodes in the social network community, on a number of user nodes in physical proximity to the given user node, on an amount of data the given user node has transferred within a time window, and/or on data transfer capabilities of the given user node.

5. The method of any of claims 1 to 4, further comprising:

detecting that the at least one popular data content is requested and cached in the at least one of the user nodes in the proximity-based cluster, and
requesting the at least one of the user nodes to transfer the at least one popular data content to a requesting user node via direct proximity-based communication.

6. An apparatus comprising:

means (1210) for arranging, by a network node, a set of user nodes of a social network community into at least one proximity-based cluster based on connectivity and/or range proximity of the user nodes;
means (1214) for determining at least one popular data content in the at least one proximity-based cluster based on a probability of a request for the at least one data content, wherein the probability is proportional to a number of data content transfer times in the at least one proximity-based cluster and/or based on data content related associations to at least one characterizing feature of the physical location of the at least one proximity-based cluster, and
means (1216) for carrying out, in response to the determining, proactive caching of the at least one popular data content into at least one of the user nodes in the at least one proximity-based cluster and/or in the network node before the at least one popular data content has been requested.

7. The apparatus of claim 6, wherein the means for arranging the set of the user nodes of the social network community into the at least one proximity-based cluster further comprises:

means for selecting at least one influential user node from the social network community, and;
means for arranging the at least one proximity-based cluster such that each proximity-based cluster comprises the at least one influential user node, and the at least one of the user nodes wherein the at least one popular data content is proactively cached is the at least one influential user node.

8. The apparatus of claim 7, wherein the means for selecting the at least one influential user node further comprises:

means for determining an adjacency matrix with respect to user nodes operating under the network node, wherein the adjacency matrix indicates connections between different the user nodes, and
means for determining the at least one influential user node based on centrality metric of the adjacency matrix.

9. The apparatus of claim 7 or 8, wherein the means for selecting the at least one influential user node further comprises:

means for selecting a given user node as an influential user node based, at least partially, on a number of connections the given user node has to other user nodes in the social network community, on a number of user nodes in physical proximity to the given user node, on an amount of data the given user node has transferred within a time window, and/or on data transfer capabilities of the given user node.

10. The apparatus of any of claims 6 to 9, further comprising:

means for detecting that the at least one popular data content is requested and cached in the at least one of the user nodes in the proximity-based cluster, and
means for requesting the at least one of the user nodes to transfer the at least one popular data content to a requesting user node via direct proximity-based communication.

11. A computer program product comprising program instructions for performing any of the methods of claims 1 to 5 when the computer program is run.

**Patentansprüche**

1. Verfahren, das Folgendes umfasst:

Anordnen (200) eines Satzes von Benutzerknoten einer sozialen Netzwerkgemeinschaft durch einen Netzwerkknoten in mindestens einem nähebasierten Cluster auf Basis einer Konnektivität und/oder einer Bereichsnähe der Benutzerknoten;
Bestimmen (202) von mindestens einem beliebten Dateninhalt in dem mindestens einen nähebasierten Cluster auf Basis einer Wahrscheinlichkeit einer Anforderung des mindestens einen Dateninhalts, wobei sich die Wahrscheinlichkeit proportional zu einer Dateninhaltsübertragungshäufigkeit in dem mindestens einen nähebasierten Cluster verhält, und/oder auf Basis von einen Dateninhalt betreffenden Verknüpfungen mit mindestens einem charakterisierenden Merkmal des physischen Standorts des mindestens einen nähebasierten Clusters, und in Reaktion auf das Bestimmen Umsetzen (204) einer proaktiven Zwischenspeicherung des mindestens einen beliebten Dateninhalts in mindestens einem der Benutzerknoten in dem mindestens einen nähebasierten Cluster und/oder im Netzwerkknoten, bevor der mindestens eine beliebte Dateninhalt angefordert wurde.

2. Verfahren nach Anspruch 1, wobei das Anordnen des Satzes von Benutzerknoten der sozialen Netzwerkgemeinschaft in dem mindestens einen nähebasierten Cluster ferner Folgendes umfasst:

Auswählen von mindestens einem einflussreichen Benutzerknoten aus der sozialen Netzwerkgemeinschaft, und Anordnen des mindestens einen nähebasierten Clusters derart, dass jeder nähebasierte Cluster den mindestens einen einflussreichen Benutzerknoten umfasst, wobei der mindestens eine der Benutzerknoten, in dem der mindestens eine beliebte Dateninhalt proaktiv zwischengespeichert wird, der mindestens eine einflussreiche Benutzerknoten ist.

3. Verfahren nach Anspruch 2, wobei das Auswählen des mindestens einen einflussreichen Benutzerknotens ferner Folgendes umfasst:

Bestimmen einer Nachbarschaftsmatrix mit Bezug auf Benutzerknoten, die unter dem Netzwerkknoten betrieben werden, wobei die Nachbarschaftsmatrix Verbindungen zwischen den Benutzerknoten anzeigt, und Bestimmen des mindestens einen einflussreichen Benutzerknotens auf Basis einer Zentralitätsmetrik der Nachbarschaftsmatrix.

4. Verfahren nach Anspruch 2 oder 3, wobei das Auswählen des mindestens einen einflussreichen Benutzerknotens ferner Folgendes umfasst:
Auswählen eines gegebenen Benutzerknotens als einen einflussreichen Benutzerknoten mindestens teilweise auf Basis einer Anzahl von Verbindungen, die der gegebene Benutzerknoten mit anderen Benutzerknoten in der sozialen Netzwerkgemeinschaft aufweist, einer Anzahl von Benutzerknoten in physischer Nähe zum gegebenen Benutzerknoten, einer Menge von Daten, die der gegebene Benutzerknoten innerhalb eines Zeitfensters übertragen hat, und/oder von Datenübertragungsfähigkeiten des gegebenen Benutzerknotens.

5. Verfahren nach einem der Ansprüche 1 bis 4, das ferner Folgendes umfasst:

Detektieren, dass der mindestens eine beliebte Dateninhalt angefordert und in dem mindestens einen der Benutzerknoten im nähebasierten Cluster zwischengespeichert ist, und

Anfordern, dass der mindestens eine der Benutzerknoten den mindestens einen beliebten Dateninhalt via direkte nähebasierte Kommunikation zu einem anfordernden Benutzerknoten überträgt.

6. Vorrichtung, die Folgendes umfasst:

Mittel (1210) zum Anordnen eines Satzes von Benutzerknoten einer sozialen Netzwerkgemeinschaft durch einen Netzwerkknoten in mindestens einem nähebasierten Cluster auf Basis einer Konnektivität und/oder einer Bereichsnähe der Benutzerknoten;

Mittel (1214) zum Bestimmen von mindestens einem beliebten Dateninhalt in dem mindestens einen nähebasierten Cluster auf Basis einer Wahrscheinlichkeit einer Anforderung des mindestens einen Dateninhalts, wobei sich die Wahrscheinlichkeit proportional zu einer Dateninhaltsübertragungshäufigkeit in dem mindestens einen nähebasierten Cluster verhält, und/oder auf Basis von einen Dateninhalt betreffenden Verknüpfungen mit mindestens einem charakterisierenden Merkmal des physischen Standorts des mindestens einen nähebasierten Clusters, und

Mittel (1216) zum Umsetzen einer proaktiven Zwischenspeicherung des mindestens einen beliebten Dateninhalts in mindestens einem der Benutzerknoten in dem mindestens einen nähebasierten Cluster und/oder im Netzwerkknoten, bevor der mindestens eine beliebte Dateninhalt angefordert wurde, in Reaktion auf das Bestimmen.

7. Vorrichtung nach Anspruch 6, wobei die Mittel zum Anordnen des Satzes von Benutzerknoten der sozialen Netzwerkgemeinschaft in dem mindestens einen nähebasierten Cluster ferner Folgendes umfassen:

Mittel zum Auswählen von mindestens einem einflussreichen Benutzerknoten aus der sozialen Netzwerkgemeinschaft, und

Mittel zum Anordnen des mindestens einen nähebasierten Clusters derart, dass jeder nähebasierte Cluster den mindestens einen einflussreichen Benutzerknoten umfasst, und der mindestens eine der Benutzerknoten, in dem der mindestens eine beliebte Dateninhalt proaktiv zwischengespeichert wird, der mindestens eine einflussreiche Benutzerknoten ist.

8. Vorrichtung nach Anspruch 7, wobei die Mittel zum Auswählen des mindestens einen einflussreichen Benutzerknotens ferner Folgendes umfassen:

Mittel zum Bestimmen einer Nachbarschaftsmatrix mit Bezug auf Benutzerknoten, die unter dem Netzwerkknoten betrieben werden, wobei die Nachbarschaftsmatrix Verbindungen zwischen den verschiedenen Benutzerknoten anzeigt, und

Mittel zum Bestimmen des mindestens einen einflussreichen Benutzerknotens auf Basis einer Zentralitätsmetrik der Nachbarschaftsmatrix.

9. Vorrichtung nach Anspruch 7 oder 8, wobei die Mittel zum Auswählen des mindestens einen einflussreichen Benutzerknotens ferner Folgendes umfassen:
Mittel zum Auswählen eines gegebenen Benutzerknotens als einen einflussreichen Benutzerknoten mindestens teilweise auf Basis einer Anzahl von Verbindungen, die der gegebene Benutzerknoten zu anderen Benutzerknoten in der sozialen Netzwerkgemeinschaft aufweist, einer Anzahl von Benutzerknoten in physischer Nähe zum gegebenen Benutzerknoten, einer Menge von Daten, die der gegebene Benutzerknoten innerhalb eines Zeitfensters übertragen hat, und/oder von Datenübertragungsfähigkeiten des gegebenen Benutzerknotens.

10. Vorrichtung nach einem der Ansprüche 6 bis 9, die ferner Folgendes umfasst:

Mittel zum Detektieren, dass der mindestens eine beliebte Dateninhalt angefordert und in dem mindestens einen der Benutzerknoten im nähebasierten Cluster zwischengespeichert ist, und

Mittel zum Anfordern, dass der mindestens eine der Benutzerknoten den mindestens einen beliebten Dateninhalt via direkte nähebasierte Kommunikation zu einem anfordernden Benutzerknoten überträgt.

11. Computerprogrammprodukt, das Programmanweisungen zum Durchführen von einem der Verfahren nach den Ansprüchen 1 bis 5, wenn das Computerprogramm ausgeführt wird, umfasst.

**Revendications**

1. Procédé, comprenant :

   l'agencement (200), par un nœud de réseau, d'un ensemble de nœuds d'utilisateur d'une communauté de réseau social en au moins une grappe basée sur la proximité sur la base d'une connectivité et/ou d'une proximité de portée des nœuds d'utilisateur ;
   la détermination (202) d'au moins un contenu de données populaire dans la au moins une grappe basée sur la proximité sur la base d'une probabilité d'une demande pour le au moins un contenu de données, dans lequel la probabilité est proportionnelle à un nombre d'occurrences de transfert de contenu de données dans la au moins une grappe basée sur la proximité et/ou basée sur des associations liées au contenu de données avec au moins une particularité caractéristique de l'emplacement physique de la au moins une grappe basée sur la proximité, et
   en réponse à la détermination, la mise en œuvre (204) d'une mise en cache proactive du au moins un contenu de données populaire dans au moins l'un des nœuds d'utilisateur dans la au moins une grappe basée sur la proximité et/ou dans le nœud de réseau avant que le au moins un contenu de données populaire n'ait été demandé.

2. Procédé selon la revendication 1, dans lequel l'agencement de l'ensemble des nœuds d'utilisateur de la communauté de réseau social en la au moins une grappe basée sur la proximité comprend en outre :

   la sélection d'au moins un nœud d'utilisateur influent à partir de la communauté de réseau social, et
   l'agencement de la au moins une grappe basée sur la proximité de sorte que chaque grappe basée sur la proximité comprenne le au moins un nœud d'utilisateur influent, dans lequel le au moins un des nœuds d'utilisateur, dans lequel le au moins un contenu de données populaire est mis en cache de manière proactive, est le au moins un nœud d'utilisateur influent.

3. Procédé selon la revendication 2, dans lequel la sélection du au moins un nœud d'utilisateur influent comprend en outre :

   la détermination d'une matrice de contiguïté par rapport à des nœuds d'utilisateur fonctionnant sous le nœud de réseau, dans lequel la matrice de contiguïté indique des connexions entre les nœuds d'utilisateur, et
   la détermination du au moins un nœud d'utilisateur influent sur la base d'une métrique de centralité de la matrice de contiguïté.

4. Procédé selon la revendication 2 ou 3, dans lequel la sélection du au moins un nœud d'utilisateur influent comprend en outre :
   la sélection d'un nœud d'utilisateur donné comme un nœud d'utilisateur influent sur la base, au moins partiellement, d'un nombre de connexions que le nœud d'utilisateur donné possède avec d'autres nœuds d'utilisateur dans la communauté de réseau social, d'un nombre de nœuds d'utilisateur à proximité physique du nœud d'utilisateur donné, d'une quantité de données que le nœud d'utilisateur donné a transféré pendant une fenêtre temporelle, et/ou de capacités de transfert de données du nœud d'utilisateur donné.

5. Procédé selon l'une quelconque des revendications 1 à 4, comprenant en outre :

   la détection que le au moins un contenu de données populaire est demandé et mis en cache dans le au moins un des nœuds d'utilisateur dans la grappe basée sur la proximité, et
   la demande, au au moins un des nœuds d'utilisateur, de transférer le au moins un contenu de données populaire à un nœud d'utilisateur demandeur via une communication directe basée sur la proximité.

6. Appareil comprenant :

   un moyen (1210) pour agencer, par un nœud de réseau, un ensemble de nœuds d'utilisateur d'une communauté de réseau social en au moins une grappe basée sur la proximité sur la base d'une connectivité et/ou d'une proximité de portée des nœuds d'utilisateur ;
   un moyen (1214) pour déterminer au moins un contenu de données populaire dans la au moins une grappe basée sur la proximité sur la base d'une probabilité d'une demande pour le au moins un contenu de données, dans lequel la probabilité est proportionnelle à un nombre d'occurrences de transfert de contenu de données dans la au moins une grappe basée sur la proximité et/ou basée sur des associations liées au contenu de données avec au moins une particularité caractéristique de l'emplacement physique de la au moins une grappe basée sur la proximité, et

un moyen (1216) pour mettre en œuvre, en réponse à la détermination, une mise en cache proactive du au moins un contenu de données populaire dans au moins l'un des nœuds d'utilisateur dans la au moins une grappe basée sur la proximité et/ou dans le nœud de réseau avant que le au moins un contenu de données populaire n'ait été demandé.

7. Appareil selon la revendication 6, dans lequel le moyen pour agencer l'ensemble des nœuds d'utilisateur de la communauté de réseau social en la au moins une grappe basée sur la proximité comprend en outre :

un moyen pour sélectionner au moins un nœud d'utilisateur influent à partir de la communauté de réseau social, et ;

un moyen pour agencer la au moins une grappe basée sur la proximité de sorte que chaque grappe basée sur la proximité comprenne le au moins un nœud d'utilisateur influent, et le au moins un des nœuds d'utilisateur, dans lequel le au moins un contenu de données populaire est mis en cache de manière proactive, est le au moins un nœud d'utilisateur influent.

8. Appareil selon la revendication 7, dans lequel le moyen pour sélectionner le au moins un nœud d'utilisateur influent comprend en outre :

un moyen pour déterminer une matrice de contiguïté par rapport à des nœuds d'utilisateur fonctionnant sous le nœud de réseau, dans lequel la matrice de contiguïté indique des connexions entre des nœuds d'utilisateur différents, et

un moyen pour déterminer le au moins un nœud d'utilisateur influent sur la base d'une métrique de centralité de la matrice de contiguïté.

9. Appareil selon la revendication 7 ou 8, dans lequel le moyen pour sélectionner le au moins un nœud d'utilisateur influent comprend en outre :

un moyen pour sélectionner un nœud d'utilisateur donné comme un nœud d'utilisateur influent sur la base, au moins partiellement, d'un nombre de connexions que le nœud d'utilisateur donné possède vers d'autres nœuds d'utilisateur dans la communauté de réseau social, d'un nombre de nœuds d'utilisateur à proximité physique du nœud d'utilisateur donné, d'une quantité de données que le nœud d'utilisateur donné a transféré pendant une fenêtre temporelle, et/ou de capacités de transfert de données du nœud d'utilisateur donné.

10. Appareil selon l'une quelconque des revendications 6 à 9, comprenant en outre :

un moyen pour détecter que le au moins un contenu de données populaire est demandé et mis en cache dans le au moins un des nœuds d'utilisateur dans la grappe basée sur la proximité, et

un moyen pour demander, au au moins un des nœuds d'utilisateur, de transférer le au moins un contenu de données populaire à un nœud d'utilisateur demandeur via une communication directe basée sur la proximité.

11. Produit programme d'ordinateur comprenant des instructions de programme pour réaliser l'un quelconque parmi les procédés des revendications 1 à 5 lorsque le programme d'ordinateur est exécuté.

FIG. 1

200 ARRANGING A SET OF USERS INTO AT LEAST ONE PROXIMITY-BASED (E.G. D2D) CLUSTER

202 DETERMINING POPULAR DATA IN A GIVEN PROXIMITY-BASED CLUSTER

204 PROACTIVELY CACHING THE POPULAR DATA CONTENT
TO AT LEAST ONE USER NODE OF THE PROXIMITY-BASED CLUSTER

FIG. 2

FIG. 3

FIG. 4

| 300 SBS | 311 UE | 312 UE |
|---------|--------|--------|

500 DATA CONTENT TRANSFER

502 REQUEST OF DATA CONTENT

504 REQUEST TO TRANSFER

506 DATA CONTENT TRANSFER

→ D2D COMMUNICATION

······> CONVENTIONAL
COMMUNICATION

FIG. 5A

| 300 SBS | 311 UE | 312 UE |
|---------|--------|--------|

502 REQUEST OF DATA CONTENT

520 DETECTING THAT REQUESTED
DATA IS NOT CACHED

522 DOWNLOAD FROM
CORE NETWORK

524 DATA CONTENT TRANSFER

FIG. 5B

300 SBS

312 UE

530 CACHING DATA CONTENT

502 REQUEST OF DATA CONTENT

524 DATA CONTENT TRANSFER

FIG. 5C

600 DATA TRANSFER DISTRIBUTION

DATA TRANSFER

TIME

602 OFF-PEAK
TIME DURATION

604 TRANSFER DATA
CONTENT TO BE CACHED

FIG. 6

300 SBS

304

313 NODE WITH
MALICIOUS CONTENT

700 ISOLATE USER
NODE 313

FIG. 7

800 SELECTING AT LEAST ONE INFLUENTIAL USER NODE FROM THE SOCIAL NETWORK COMMUNITY

802 ARRANGING THE AT LEAST ONE PROXIMITY-BASED CLUSTER SUCH THAT EACH PROXIMITY-BASED CLUSTER COMPRISES AT LEAST ONE INFLUENTIAL USER NODE

804 PROACTIVELY CACHING THE POPULAR DATA CONTENT TO THE AT LEAST ONE INFLUENTIAL USER NODE

FIG. 8

906 ACHIEVABLE DATA RATE

900 NUMBER OF CONNECTIONS TO OTHER NODES

311 INFLUENTIAL USER NODE

902 PHYSICAL PROXIMITY TO OTHER NODES

904 AMOUNT OF TRANSFERRED DATA

FIG. 9

300 SBS

311 UE

312 UE

200-204 PROACTIVE CACHING

1000 BUILD CACHING DATABASE

506 DATA CONTENT TRANSFER

1002 INDICATION ABOUT CACHING

1004 ACKNOWLEDGEMENT

= DATABASE

FIG. 10

1100 RECEIVING POPULAR DATA CONTENT FROM A NETWORK NODE

1102 CACHING THE RECEIVED POPULAR DATA CONTENT

1104 AS A RESPONSE TO A REQUEST, TRANSFER THE CACHED POPULAR DATA CONTENT TO ANOTHER USER NODE VIA DIRECT PROXIMITY-BASED COMMUNICATION

FIG. 11

1200

1202 CTRL

1210 SOCIAL NETWORK CONTROL CIRCUITRY

1212 D2D CONTROL CIRCUITRY

1214 DATA CONTENT CONTROL CIRCUITRY

1216 CACHE CONTROL CIRCUITRY

1218 DATA TRANSFER CONTROL CIRCUITRY

1204 MEMORY

CACHE

PROG.

1206 RADIO INTERFACE (TRX)

1208 USER INTERFACE

FIG. 12

1300

1302 CTRL

1310 CACHE CONTROL CIRCUITRY

1312 DATA TRANSFER CONTROL CIRCUITRY

1304 MEMORY

CACHE

PROG.

1306 RADIO INTERFACE (TRX)

1308 USER INTERFACE

FIG. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Wireless video content delivery through distributed caching and peer-to-peer gossiping. **NEGIN GOL-REZAEI et al.** SIGNALS, SYSTEMS AND COMPUTERS (ASILOMAR), 2011 CONFERENCE RECORD OF THE FORTY FIFTH ASILOMAR CONFERENCE ON. IEEE, 06 November 2011, 1177-1180

- Cache less for more in information-centric networks (extended version). **HAI WEI KOONG et al.** COMPUTER COMMUNICATIONS. ELSEVIER SCIENCE PUBLISHERS BV, 29 January 2013, vol. 36, 758-770